# EUROPÄISCHE PATENTSCHRIFT

(11) **EP 2 479 450 B1**
(45) Veröffentlichungstag und Bekanntmachung des Hinweises auf die Patenterteilung: **27.11.2019**
(21) Anmeldenummer: 12151671.0
(22) Anmeldetag: 19.01.2012
(51) Int. Cl.: F16D 55/226, F16D 65/38, F16D 66/02

(54) **Verfahren zum Rejustieren beidseitigen Lüftspiels bei Schiebesattelbremsen von Fahrzeugen und eine entsprechende Anordnung**
Method for readjusting two-sided clearance for floating caliper brakes of vehicles and corresponding device
Procédé de réajustement du jeu d'air sur les deux côtés dans des freins à étrier coulissant de véhicules et dispositif correspondant

(30) Priorität: 21.01.2011 DE 102011009199
(43) Veröffentlichungstag der Anmeldung: 25.07.2012
(73) Patentinhaber: KNORR-BREMSE Systeme für Nutzfahrzeuge GmbH, 80809 München (DE)
(72) Erfinder: Werth, Alexander, 80997 München (DE); Seidenschwang, Matthias, 81249 München (DE); Trimpe, Robert, 82234 Weßling (DE); Baumgartner, Johann, 85368 Moosburg (DE); Peschel, Michael, 82296 Schöngeising (DE)
(74) Vertreter: Mattusch, Gundula

(56) Entgegenhaltungen:
- WO-A1-03/080415
- DE-B4-102007 001 213

## Beschreibung

Die Erfindung betrifft ein Verfahren zum Rejustieren beidseitigen Lüftspiels bei Schiebesattelbremsen von Fahrzeugen nach dem Oberbegriff des Anspruchs 1. Die Erfindung bezieht sich auch auf eine Anordnung zur Durchführung eines solchen Verfahrens.

Scheibenbremsen für Fahrzeuge sind in unterschiedlicher Bauweise bekannt.

Das Dokument DE 10 2007 001 213 B4 beschreibt eine Einrichtung für Scheibenbremsen mit Schiebesattel, die zum Ziel hat, ein beiderseits einer Bremsscheibe vorhandenes Lüftspiel zu gewährleisten. Dazu weist die Scheibenbremse mindestens eine Rückstelleinrichtung auf. Eine Nachstellvorrichtung korrigiert einen entstehenden Summenverschleiß beider Seiten. Die Scheibenbremse weist mindestens eine Rückstelleinrichtung zur Rückstellung des Schiebesattels auf. Zur Rejustage einer Lüftspielverteilung werden sehr hohe Bremskräfte aufgebracht.

Diese Einrichtung hat sich bewährt, jedoch ergeben sich gerade im Fahrzeugbereich ständig neue Forderungen nach Energiesparmaßnahmen, wie zum Beispiel Senkung eines Luftverbrauchs von Pneumatikbremsen und dem damit verbundenen Energieaufwand zur Erzeugung von Druckluft.

Es ist daher die Aufgabe der vorliegenden Erfindung, ein Verfahren zum Ermitteln von Unregelmäßigkeiten an einer Radbremse eines Fahrzeugs bereitzustellen.

Eine weitere Aufgabe besteht darin, eine Anordnung zur Durchführung eines solchen Verfahrens zu schaffen.

Die Aufgabe wird durch ein Verfahren mit den Merkmalen der Ansprüche 1 und 2 und durch eine Anordnung mit den Merkmalen des Anspruchs 12 gelöst.

Eine Idee der Erfindung besteht darin, die Rückstelleinrichtung zur Rückstellung des Bremssattels zu verbessern, indem ein Bedarf zum Rejustieren ermittelt und dementsprechend eine Bremskraft errechnet wird, die dann in die Scheibenbremse eingeleitet wird.

Dabei ist es möglich, ungewollte Verlagerungen des Lüftspiels zu erfassen und durch Rejustieren zu beheben.

Dadurch wird Verschleiß von Bremsbelägen und Bremsscheibe reduziert.

Demgemäß weist ein Verfahren zum Rejustieren beidseitigen Lüftspiels einer Scheibenbremse eines Fahrzeugs zwischen Bremsbelägen und einer Bremsscheibe, mit einem als Schiebesattel ausgebildeten Bremssattel, einer Nachstelleinrichtung zum Ausgleich einer verschleißbedingten Änderung des Lüftspiels, und mindestens einer Rückstelleinrichtung zur Rückstellung des Bremssattels in eine Ausgangsstellung,
die Verfahrensschritte gemäß den Ansprüchen 1 und 2 auf.

Eine Anordnung zur Durchführung der beschriebenen Verfahren zum Rejustieren beidseitigen Lüftspiels einer Scheibenbremse eines Fahrzeugs zwischen Bremsbelägen und einer Bremsscheibe, mit einem als Schiebesattel ausgebildeten Bremssattel, einer Nachstelleinrichtung zum Ausgleich einer verschleißbedingten Änderung des Lüftspiels, und mindestens einer Rückstelleinrichtung zur Rückstellung des Bremssattels in eine Ausgangsstellung, umfasst die Scheibenbremse mit einem Aktuator; eine Verschleißerkennungseinrichtung; und ein Steuergerät; wobei die Verschleißerkennungseinrichtung mit der Nachstelleinrichtung der Scheibenbremse zur Erkennung von Verschleiß der Bremsbeläge und der Bremsscheibe, dem Aktuator zur Ermittlung eines Bremskraftkollektivs und mit dem Steuergerät verbunden ist, und das Steuergerät mit dem Aktuator verbunden ist.

Die Verteilung zwischen innerem und äußerem Lüftspiel wird über das elektronische Steuergerät anhand der Parameter Bremsbelagverschleiß und tatsächlich erfolgtem Bremskraftkollektiv ermittelt und bei Bedarf aktiv durch einen Bremsvorgang im Stillstand des Fahrzeugs rejustiert. Unter einem Bremskraftkollektiv ist die Anzahl von Bremsvorgängen innerhalb eines Zeitabschnitts zu verstehen.

Durch die Bremsungen unterhalb des Schwellenwertes werden insbesondere leichte Bremsvorgänge erfasst, welche die Rückstelleinrichtung nicht immer vollständig betätigen könnten.

Außerdem können beim Ermitteln der Lüftspielverteilung als Summenlüftspiel Sensoren verwendet werden. Dies kann auch zusätzlich oder alternativ erfolgen.

Die Verteilung des Summenlüftspiels auf das Lüftspiel außen und Lüftspiel innen kann in gewisser Weise angenommen werden. Dann kann ein Lüftspiel innen oder/und eine Lüftspieldifferenz aus dem Lüftspiel außen und dem Lüftspiel innen am Ende des vorbestimmten Zeitabschnitts berechnet werden.

Das so berechnete Lüftspiel innen oder/und die Lüftspieldifferenz können mit einem Lüftspielgrenzwert verglichen werden. Natürlich kann dieser Lüftspielgrenzwert anhand von Randbedingungen anpassbar sein. Wird der Lüftspielgrenzwert durch das so errechnete Lüftspiel innen oder/und die Lüftspieldifferenz erreicht oder unterschritten, so kann das Ermitteln der erforderlichen Bremskraft zum Rejustieren erfolgen. Die zum Rejustieren erforderliche Bremskraft kann als ein fester Schwellenwert der Bremskraft entsprechend des Typs der Scheibenbremse ein vorbestimmter Wert sein. Sie kann auch dynamisch, z.B. anhand des Bremsentyps, der Restbelagstärke der Bremsbeläge und/oder der Temperatur der Bremsbeläge, zur Optimierung eines Luftverbrauchs der Scheibenbremse und/oder der Bauteilbelastung angepasst werden. Damit lässt sich ein geringerer Energieverbrauch erzielen.

Dazu können entsprechende Korrekturkurven/Kennfelder im Steuergerät und/oder in einem Speicher abgelegt werden, wodurch ein schneller Zugriff und eine genaue Anpassung an unterschiedliche Betriebszustände und Bauteile ermöglicht wird.

Alternativ kann das Rejustieren auch in festgelegten Intervallen erfolgen.

Die Anordnung kann mindestens einen Sensor zur Verschleißerfassung der Bremsbeläge und der Bremsscheibe oder/und mindestens einen Temperatursensor zur Temperaturerfassung der Bremsbeläge und der Bremsscheibe aufweisen. Somit wird ein große Anpassungsfähigkeit an unterschiedliche Gegebenheiten erreicht.

Die Erfindung wird nun anhand eines Ausführungsbeispiels mit Bezug auf die beigefügten Zeichnungen näher erläutert. Hierbei zeigt:
- Fig. 1: ein schematisches Blockschaltbild einer erfindungsgemäßen Anordnung;
- Fig. 2: eine Draufsicht auf eine Scheibenbremse in schematischer Darstellung;
- Fig. 3: eine schematische Darstellung symmetrischer Lüftspiele;
- Fig. 4: eine schematische Darstellung verlagerter Lüftspiele;
- Fig. 5: ein schematisches Diagramm einer Verteilung von Lüftspielen; und
- Fig. 6: ein Flussdiagramm des erfindungsgemäßen Verfahrens.

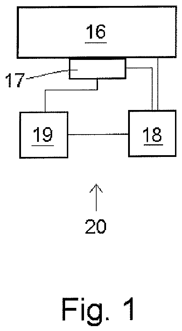

Fig. 1 zeigt ein schematisches Blockschaltbild einer erfindungsgemäßen Anordnung 20 zur Durchführung eines erfindungsgemäßen Verfahrens zum Rejustieren beidseitigen Lüftspiels LS bei Schiebesattelbremsen von Fahrzeugen.

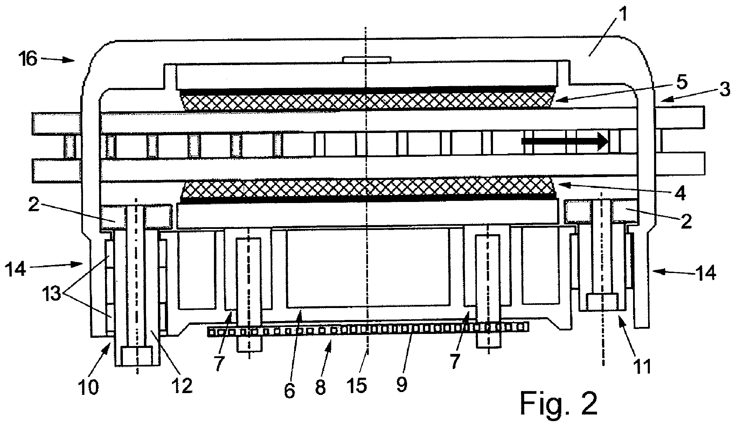

Die Anordnung 20 umfasst im Wesentlichen eine Scheibenbremse 16 mit einem Aktuator 17, eine Verschleißerkennungseinrichtung 18 und ein Steuergerät 19. Die Scheibenbremse 16 ist eine Schiebesattelbremse und wird im Zusammenhang mit Fig. 2 noch weiter erläutert. Die Scheibenbremse 16 ist mit dem Aktuator 17 verbunden, welcher für ihre Betätigung vorgesehen ist. Die Verschleißerkennungseinrichtung 18 dient zur Erkennung von Verschleiß von Bremsbelägen 4,5 und der Bremsscheibe 3 (siehe Fig. 2) der Scheibenbremse 16. Dazu ist sie mit der Scheibenbremse 16, insbesondere mit deren Nachstelleinrichtung 8 (siehe Fig. 2) und dem Aktuator 17 verbunden. Eine weitere Verbindung der Verschleißerkennungseinrichtung 18 ist mit einem Bremssteuergerät (nicht gezeigt) vorgesehen. Schließlich ist das Steuergerät 19 mit der Verschleißerkennungseinrichtung 18 und dem Aktuator 17 direkt oder indirekt verbunden.

Die Verschleißerkennungseinrichtung 18 erfasst einen Bremsbelagverschleiß (Verschleiß der Bremsscheibe 3 ist mit inbegriffen) der Scheibenbremse 16 über deren Nachstelleinrichtung 8, sowie Betätigungen der Scheibenbremse über die Verbindung mit dem Aktuator 17. Auf diese Weise werden die Parameter Bremsbelagverschleiß und tatsächlich erfolgtes Bremskraftkollektiv, d.h. alle Bremsungen in einem vorbestimmten Zeitabschnitt, ermittelt. Außerdem erfasst die Verschleißerkennungseinrichtung 18 über den Aktuator 17, durch das Bremssteuergerät oder/und über zusätzliche Bremskraftsensoren eine Bremskraft der jeweiligen erfassten Bremsungen des Bremskraftkollektivs.

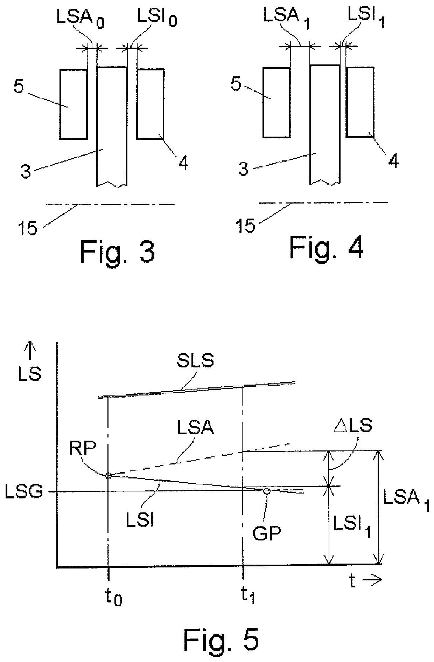

Das Steuergerät 19 dient zur Berechnung einer Verteilung der Lüftspiele LS (siehe Fig. 3, 4 und 5) der Scheibenbremse 16 anhand der durch die Verschleißerkennungseinrichtung 18 erfassten Parameter und steuert dementsprechend eine Einstellung beidseitigen Lüftspiels LS der Scheibenbremse 16 mittels einer Rejustierung der Scheibenbremse 16 durch einen Bremsvorgang bei Stillstand über den Aktuator 17. Dabei kann das Steuergerät 19 den Aktuator 17 mit einer zuvor berechneten Bremskraft beaufschlagen. Dies wird unten noch im Detail beschrieben.

Fig. 2 ist eine Draufsicht auf die Scheibenbremse 16 in schematischer Darstellung.

Die Scheibenbremse 16 ist zum Beispiel in einem Nutzfahrzeug eingesetzt. Sie weist eine um eine Achse 15 drehbare Bremsscheibe 3 auf, die von einem Bremssattel 1 übergriffen ist, in dem zwei Bremsbeläge 4 und 5 beiderseits der Bremsscheibe 3 angeordnet sind und diese bei einem Bremsvorgang kontaktieren. Der zuspannseitige Bremsbelag 4 wird im Weiteren auch als innerer Bremsbelag 4 bezeichnet, und der reaktionsseitige Bremsbelag 5 wird auch äußerer Bremsbelag 5 genannt.

Der Bremssattel 1 ist ein so genannter Schiebesattel, welcher über zwei Befestigungselemente an einem fahrzeugseitigen Bremsträger 2 befestigt ist. Auslaufseitig gemäß Pfeil an der Bremsscheibe 3 in Fig. 2 ist ein Befestigungselement als Loslager 11 und gegenüberliegend ein einlaufseitiges Befestigungselement als Festlager ausgebildet.

Den Befestigungselementen ist eine Zuspanneinrichtung zugeordnet, die an eine Brücke 6 des Bremssattels 1 angreift und hier zwei Stellspindeln 7 aufweist, über die der zugehörige Bremsbelag 4 gegen die Bremsscheibe 3 pressbar ist. Die Zuspanneinrichtung wird von dem Aktuator 17 (Fig. 1) betätigt.

Eine der beiden Stellspindeln 7 weist eine Nachstelleinrichtung 8 auf, mit der eine verschleißbedingte Änderung eines Lüftspiels LS (siehe Fig. 3 und 4) zwischen dem Bremsbelag 4 und der Bremsscheibe 3 im Wesentlichen ausgleichbar ist. Für eine synchrone Betätigung der Stellspindeln 7 ist ein Transmissionselement, z.B. in Form einer Kette 9 vorgesehen, mit dem die beiden Stellspindeln 7 gleichzeitig verdrehbar sind. Die Nachstelleinrichtung 8 steht mit der Verschleißerkennungseinrichtung 18 (Fig. 1) so in Verbindung, dass eine Nachstellung z.B. als Umdrehungszahl, Winkel, Verstellweg oder dergleichen mit einem geeigneten Messgeber erfasst und an die Verschleißerkennungseinrichtung 18 übertragen wird.

Bei einer Bremsung wird zunächst der innere Bremsbelag 4 gegen die Bremsscheibe 3 gepresst, während nachfolgend aufgrund der sich ausbildenden Reaktionskräfte der als Schiebesattel ausgebildete Bremssattel 1 unter Mitnahme des äußeren Bremsbelags 5 entgegengesetzt der Zuspannrichtung geführt und der äußere Bremsbelag 5 gegen die Bremsscheibe gepresst wird.

Um eine Rückstellung des Bremssattels 1 beim Lösen der Bremse zu erreichen, d.h. den Bremssattel 1 in seine Ausgangsstellung zurückzuführen, sind aktions-, d.h. zuspannseitig, Rückstelleinrichtungen 14 am Festlager 10 und Loslager 11 (es ist auch nur eine, vorzugsweise am Festlager 10 möglich) vorgesehen, mit welchen der Bremssattel 1 entgegen der Verschieberichtung beim Zuspannen selbsttätig in die Ausgangsstellung bringbar ist. Das Festlager weist hier einen Führungsholm 12 und Gleithülsen 13 auf.

Eine ausführliche Beschreibung der Rückstelleinrichtung 14 und ihrer Funktion ist dem Dokument DE 10 2007 001 213 B4 entnehmbar.

Fig. 3 zeigt eine schematische Darstellung symmetrischer Lüftspiele LS an der um die Achse 15 drehbaren Bremsscheibe 3 in einer Seitenansicht.

In einem Ausgangszustand, der hier mit dem Index 0 gekennzeichnet ist, ist ein Lüftspiel innen LSI₀ zwischen dem inneren Bremsbelag 4 und der Bremsscheibe 3 gleich oder im Wesentlichen gleich einem Lüftspiel außen LSA₀ zwischen dem äußeren Bremsbelag 4 und der Bremsscheibe 3.

Nach erfolgten Rückstellungen (zu einem späteren Zeitpunkt, hier mit dem Index 1 gekennzeichnet) können sich die Lüftspiele verlagern, wie in Fig. 4 in einer schematische Darstellung verlagerter Lüftspiele LS gezeigt ist. Dabei ist ein Summenlüftspiel SLS (siehe auch Fig. 5) von der Größe her im Wesentlichen gleich einem Summenlüftspiel SLS der Lüftspiele LSI₀ und LSA₀ in dem in Fig. 3 gezeigten Ausgangszustand. Jedoch ist je nach Bremskraftkollektiv, d.h. Anzahl von Bremsungen in einem Zeitabschnitt, des Fahrzeugs und den Verhältnissen in der Scheibenbremse 16 das Lüftspiel entgegen dem Ausgangszustand hier auf die äußere Seite verlagert. Das Lüftspiel außen LSA₁ ist wesentlich größer als das Lüftspiel innen LSI₁. Die Rückstelleinrichtung 14 der Scheibenbremse 16 weist einen Klemmring auf, der beim Rückstellen verschoben wird. Eine solche Verschiebung kann bei geringen Bremskräften ebenfalls zu gering sein. Durch die Nachstelleinrichtung 8 wird dies zwar korrigiert, trotzdem kann das Lüftspiel außen LSA₁ größer als das Lüftspiel innen LSI₁ werden.

Fig. 5 zeigt ein schematisches Diagramm einer Verteilung von Lüftspielen LS, aufgetragen über einer Zeit t. Mit t₀ ist ein Ausgangszustand bezeichnet, in welchem eine gleichmäßige Verteilung der Lüftspiele LS in einem Referenzpunkt RP vorliegt. Das Lüftspiel innen LSI ist in einer durchgezogenen Linie aufgetragen. Das Lüftspiel außen LSA ist gestrichelt gezeichnet und das Summenlüftspiel SLS (= LSA + LSI) ist eine Doppellinie.

Innerhalb eines Zeitabschnitts, in welchem Bremsvorgänge unterhalb eines vorbestimmten Bremskraftwertes (Schwellenwert F_{S}) und Rückstellungen erfolgen, von dem Ausgangszustand t₀ (Fig. 3) bis zu einem Zeitpunkt t₁ (Fig. 4) vergrößert sich das Lüftspiel außen LSA auf den Wert LSA₁. Das Lüftspiel innen LSI hingegen verkleinert sich bis zu dem Wert LSI₁ im Zeitpunkt t₁. Dennoch vergrößert sich das Summenlüftspiel SLS. Im Zeitpunkt t1 ergibt sich eine Lüftspieldifferenz ΔLS = LSA₁ - LSI₁.

Ausgehend von einer solchen bekannten oder angenommenen Verteilung des Summenlüftspiels SLS zwischen innerem Bremsbelag 4 und äußerem Bremsbelag 5 kann nun eine Verlagerung (wie in Fig. 4 dargestellt) wie folgt erkannt werden.

Sofern bis zu dem Zeitpunkt t₁ ab dem Ausgangszustand im Referenzpunkt RP mit dem Zeitpunkt t₀ keine Bremsbetätigung der jeweiligen Bremse über dem Schwellenwert F_{S} stattgefunden hat, kann davon ausgegangen werden, dass der in dem Zeitabschnitt t₁ - t₀ stattgefundene, erfasste Verschleiß (Bremsbeläge 4, 5 und Bremsscheibe 3) nahezu vollständig zu einer Lüftspielvergrößerung im selben Umfang auf der Außenseite (LSA₁) und in ebenso selbem Umfang entsprechend zu einer Lüftspielverkleinerung auf der Innenseite (LSI₁) geführt hat (siehe Fig. 4 und 5).

In Fig. 5 ist ein Lüftspielgrenzwert LSG eingezeichnet. Wenn dieser Lüftspielgrenzwert LSG von dem entsprechend (von dem Steuergerät 19) berechneten Lüftspiel innen LSI₁ in einem Grenzpunkt GP unterschritten wird, wie es in Fig. 5 in einem nachfolgenden Zeitabschnitt zeitlich nach t₁ der Fall ist, wird von dem Steuergerät 19 (siehe Fig. 1) zu einem nächstmöglichen Zeitpunkt eine statische Bremsung im Stillstand des Fahrzeugs eingeleitet. Diese statische Bremsung ist von der Höhe der Bremskraft so bemessen, dass eine Rejustierung/Zentrierung des beiderseitigen Lüftspiels LSA und LSI erfolgt, indem der Klemmring oder ein Funktionäquivalent der Rückstelleinrichtung 14 verschoben wird und der Zustand einer gleichmäßigen Verteilung der des beiderseitigen Lüftspiels LSA und LSI wie in Fig. 3 gezeigt eingestellt wird.

Ein solcher Rejustagevorgang findet im Stillstand des Fahrzeugs statt, beispielsweise nach Einschalten oder Ausschalten der Zündung (darunter ist bei einem Selbstzündermotor [Dieselmotor] das elektrische Bordsystem zu verstehen).

Bei Verlust der Information über den Zustand der Lüftspielverteilung, z.B. Unterbrechung der Stromversorgung, justiert das Steuergerät 19 der Anordnung 20 prophylaktisch (z.B. bei Einschalten der Zündung).

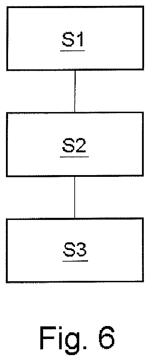

Ein Flussdiagramm des erfindungsgemäßen Verfahrens zum Rejustieren beidseitigen Lüftspiels bei Schiebesattelbremsen von Fahrzeugen ist in Fig. 6 gezeigt.

In einem ersten Verfahrensschritt S1 wird ein Bedarf für eine Rejustierung ermittelt. Dies erfolgt dadurch, dass - wie im Zusammenhang mit Fig. 5 beschrieben - die Verschleißerkennungseinrichtung 18 einen Verschleißwert in einem vorbestimmten Zeitabschnitt t₁ - t₀ bei erfolgten Bremsungen unterhalb eines Schwellenwertes F_{S} als Summenlüftspiel SLS ermittelt. Das Steuergerät 19 berechnet aus einer angenommenen Verteilung des Summenlüftspiels SLS auf das Lüftspiel LSA und LSI das Lüftspiel LSI₁ und vergleicht dieses mit einem Lüftspielgrenzwert LSG. Wenn das so errechnete Lüftspiel LSI₁ unter dem Lüftspielgrenzwert LSG liegt bzw. ihn im Grenzpunkt GP schneidet, wird in einem zweiten Verfahrensschritt S2 eine erforderliche Bremskraft zur Rejustierung ermittelt.

Der zur Rejustierung erforderliche Schwellenwert der Bremskraft kann entweder entsprechend des Typs der Scheibenbremse 16 als ein fixer Wert im Steuergerät 19 hinterlegt sein, z.B. in einer Speichereinrichtung, oder dynamisch zur Optimierung des Luftverbrauchs (bei einer pneumatischen Scheibenbremse) und/oder der Bauteilbelastung angepasst werden. Die Haupteinflussparameter sind neben dem Bremsentyp mit seinem spezifischen Verformungsverhalten die Restbelagstärke und in gewissem Maße die Temperatur der Bremsbeläge 4, 5. Eine Berücksichtigung der Einflussfaktoren kann über die Hinterlegung/Speicherung entsprechender Korrekturkurven/Kennfelder erfolgen. Durch die dynamische Ermittlung dieses Schwellenwertes kann sowohl die Erkennung des Bedarfs einer Rejustage als auch der hierfür erforderliche Schwellenwert der Bremskraft optimiert werden.

In einem dritten Verfahrensschritt wird dann die zur Rejustierung erforderliche Bremskraft mittels des Aktuators 17 eingeleitet. Dazu wird bei einem nächsten Halt des Fahrzeugs (ermittelbar z.B. über den Fahrzeugbus) oder vor dem Ausschalten der Zündung diese Bremskraft zur Rejustage zum Rejustieren beidseitigen Lüftspiels aufgebracht.

Beispielsweise ist mit verschlissenen Bremsbelägen 4, 5 durch die damit verbundene, kaum noch vorhandene Kompressibilität der Bremsbeläge 4, 5 eine hohe Bremskraft (Zuspannkraft) von angenommen 200 kN nötig, um durch entsprechende Verschiebung des Bremssattels 1 relativ zum achsfesten Teil der Scheibenbremse 16 eine Verschiebung und damit Rejustage des Lagers (Klemmring) der Rückstelleinrichtung 14 zu erzeugen.

Bei neuen Bremsbelägen 4, 5 und entsprechend höherer Kompressibilität ist zur Verschiebung des Klemmringes eine bis zu ca. 40% geringere Zuspannkraft nötig. Durch Hinterlegung der Verhältnisse im Steuergerät 19 wird die erforderliche Bremsstärke ermittelt.

Die Erfindung ist nicht auf die oben beschriebenen Ausführungsbeispiele beschränkt. Sie ist selbstverständlich im Rahmen der beigefügten Ansprüche modifizierbar.

So ist es denkbar, dass alternativ zu dem beschriebenen Verfahren mit quasi geschlossenem Regelkreis auch eine einfache Steuerung realisiert werden kann, indem unter Annahme eines maximalen Verschleißes in einem Zeitabschnitt x die Einleitung der Rejustage auch in festgelegten Intervallen erfolgt. Beispielsweise grundsätzlich nach Einschaltung der Zündung (elektrisches Bordsystem) nach bestimmungsgemäßer Befüllung der für die jeweiligen Bremskreise erforderlichen Energievorräte.

Ergänzend oder alternativ zu der theoretischen Ermittlung der Lüftspielverteilung des Summenlüftspiels SLS kann auch ein geeigneter Sensor zur messtechnischen Erfassung der Lüftspiele LSA, LSI verwendet werden.

### Bezugszeichenliste

- 1: Bremssattel
- 2: Bremsträger
- 3: Bremsscheibe
- 4: Bremsbelag innen
- 5: Bremsbelag außen
- 6: Brücke
- 7: Stellspindel
- 8: Nachstelleinrichtung
- 9: Kette
- 10: Festlager
- 11: Loslager
- 12: Führungsholm
- 13: Gleithülse
- 14: Rückstelleinrichtung
- 15: Achse
- 16: Scheibenbremse
- 17: Aktuator
- 18: Verschleißerkennungseinrichtung
- 19: Steuergerät
- 20: Anordnung
- GP: Grenzpunkt
- LS: Lüftspiel
- LSA: Lüftspiel außen
- LSI: Lüftspiel innen
- LSG: Lüftspielgrenzwert
- ΔLS: Lüftspieldifferenz
- RP: Referenzpunkt
- SLS: Summenlüftspiel
- S1...3: Verfahrensschritt
- t: Zeit

## Patentansprüche

1. Verfahren zum Rejustieren beidseitigen Lüftspiels (LSA, LSI) einer Scheibenbremse (16) eines Fahrzeugs zwischen Bremsbelägen (4, 5) und einer Bremsscheibe (3), mit einem als Schiebesattel ausgebildeten Bremssattel (1), einer Nachstelleinrichtung (8) zum Ausgleich einer verschleißbedingten Änderung des Lüftspiels (LSA, LSI), und mindestens einer Rückstelleinrichtung (14) zur Rückstellung des Bremssattels (1) in eine Ausgangsstellung, mit folgenden Verfahrensschritten:
S1 Ermitteln eines Bedarfs für ein Rejustieren durch Ermitteln einer Lüftspielverteilung zwischen einem Lüftspiel innen (LSI) und einem Lüftspiel außen (LSA);
S2 Ermitteln einer erforderlichen Bremskraft zum Rejustieren; und
S3 Rejustieren beidseitigen Lüftspiels (LSA, LSI) durch Einleiten der so ermittelten Bremskraft in die Scheibenbremse (16) bei Stillstand des Fahrzeugs,
**dadurch gekennzeichnet, dass** beim Ermitteln der Lüftspielverteilung ein Verschleißwert in einem vorbestimmten Zeitabschnitt (t₁ - t₀) bei erfolgten Bremsungen unterhalb eines Schwellenwertes (F_{S}) als Summenlüftspiel (SLS) ermittelt wird.

2. Verfahren zum Rejustieren beidseitigen Lüftspiels (LSA, LSI) einer Scheibenbremse (16) eines Fahrzeugs zwischen Bremsbelägen (4, 5) und einer Bremsscheibe (3), mit einem als Schiebesattel ausgebildeten Bremssattel (1), einer Nachstelleinrichtung (8) zum Ausgleich einer verschleißbedingten Änderung des Lüftspiels (LSA, LSI), und mindestens einer Rückstelleinrichtung (14) zur Rückstellung des Bremssattels (1) in eine Ausgangsstellung, mit folgenden Verfahrensschritten:
S1 Ermitteln eines Bedarfs für ein Rejustieren durch Ermitteln einer Lüftspielverteilung zwischen einem Lüftspiel innen (LSI) und einem Lüftspiel außen (LSA);
S2 Ermitteln einer erforderlichen Bremskraft zum Rejustieren; und
S3 Rejustieren beidseitigen Lüftspiels (LSA, LSI) durch Einleiten der so ermittelten Bremskraft in die Scheibenbremse (16) bei Stillstand des Fahrzeugs,
**dadurch gekennzeichnet, dass** beim Ermitteln der Lüftspielverteilung ein maximaler Verschleißwert in einem vorbestimmten Zeitabschnitt (t₁ - t₀) bei erfolgten Bremsungen unterhalb eines Schwellenwertes (F_{S}) als Summenlüftspiel (SLS) angenommen wird.

3. Verfahren nach Anspruch 1 oder 2, **dadurch gekennzeichnet, dass** beim Ermitteln der Lüftspielverteilung als Summenlüftspiel (SLS) Sensoren verwendet werden.

4. Verfahren nach einem der vorhergehenden Ansprüche, **dadurch gekennzeichnet, dass** aus einer angenommenen Verteilung des Summenlüftspiels (SLS) auf das Lüftspiel außen (LSA) und Lüftspiel innen (LSI) ein Lüftspiel innen (LSI₁) oder/und eine Lüftspieldifferenz (ΔLS) aus dem Lüftspiel außen (LSA) und dem Lüftspiel innen (LSI) am Ende des vorbestimmten Zeitabschnitts (t₁ - t₀) berechnet wird.

5. Verfahren nach einem der Ansprüche 2 bis 4, **dadurch gekennzeichnet, dass** das berechnete Lüftspiel innen (LSI₁) oder/und die Lüftspieldifferenz (ΔLS) mit einem Lüftspielgrenzwert (LSG) verglichen wird.

6. Verfahren nach Anspruch 5, **dadurch gekennzeichnet, dass** das Ermitteln der erforderlichen Bremskraft zum Rejustieren erfolgt, wenn das so errechnete Lüftspiel innen (LSI₁) oder/und die Lüftspieldifferenz (ΔLS) gleich groß wie der Lüftspielgrenzwert (LSG) oder kleiner als der Lüftspielgrenzwert (LSG) ist.

7. Verfahren nach einem der vorhergehenden Ansprüche, **dadurch gekennzeichnet, dass** die zum Rejustieren erforderliche Bremskraft als ein fester Schwellenwert der Bremskraft entsprechend des Typs der Scheibenbremse (16) ein vorbestimmter Wert ist.

8. Verfahren nach einem der vorhergehenden Ansprüche, **dadurch gekennzeichnet, dass** die zum Rejustieren erforderliche Bremskraft dynamisch zur Optimierung eines Luftverbrauchs der Scheibenbremse (16) und/oder der Bauteilbelastung angepasst wird.

9. Verfahren nach Anspruch 8, **dadurch gekennzeichnet, dass** die zum Rejustieren erforderliche Bremskraft dynamisch anhand des Bremsentyps, der Restbelagstärke der Bremsbeläge (4, 5) und/oder der Temperatur der Bremsbeläge (4, 5) angepasst wird.

10. Verfahren nach Anspruch 8 oder 9, **dadurch gekennzeichnet, dass** das dynamische Anpassen der zum Rejustieren erforderlichen Bremskraft mittels der Restbelagstärke der Bremsbeläge (4, 5) und/oder der Temperatur der Bremsbeläge (4, 5) anhand entsprechender Korrekturkurven/Kennfelder erfolgt.

11. Verfahren nach einem der vorhergehenden Ansprüche, **dadurch gekennzeichnet, dass** das Rejustieren in festgelegten Intervallen erfolgt.

12. Anordnung (20) zur Durchführung des Verfahrens nach einem der vorhergehenden Ansprüche, umfassend:
die Scheibenbremse (16) mit einem Aktuator (17);
eine Verschleißerkennungseinrichtung (18); und
ein Steuergerät (19);
wobei die Verschleißerkennungseinrichtung (18) mit der Nachstelleinrichtung (8) der Scheibenbremse (16) zur Erkennung von Verschleiß der Bremsbeläge (4,5) und der Bremsscheibe (3), dem Aktuator (17) zur Ermittlung eines Bremskraftkollektivs und mit dem Steuergerät (19) verbunden ist, und das Steuergerät (19) mit dem Aktuator (17) verbunden ist.

13. Anordnung (20) nach Anspruch 12, **dadurch gekennzeichnet, dass** die Anordnung (20) mindestens einen Sensor zur Verschleißerfassung der Bremsbeläge (4,5) und der Bremsscheibe (3) oder/und mindestens einen Temperatursensor zur Temperaturerfassung der Bremsbeläge (4,5) und der Bremsscheibe (3) aufweist.

## Claims

1. A method for readjusting a two-sided air gap (LSA, LSI) of a disc brake (16) of a vehicle between brake pads (4, 5) and a brake disc (3), having a brake calliper (1) designed as a sliding calliper, an adjusting device (8) for compensating for a change in the air gap (LSA, LSI) due to wear and at least one reset device (14) for resetting the brake calliper (1) to an initial position, with the following method steps:
S1 the identification of a need for readjustment by determining an air gap distribution between an inner air gap (LSI) and an outer air gap (LSA);
S2 the determination of a braking force required for resetting; and
S3 the readjustment of the two-sided air gap (LSA, LSI) by introducing the braking force thus determined into the disk brake (16) when the vehicle is at a standstill,
**characterised in that** when determining the air gap distribution a wear value in a predetermined time period (t₁ - t₀) on completion of braking below a threshold value (F_{S}) as a total air gap (SLS) is determined.

2. A method for readjusting a two-sided air gap (LSA, LSI) of a disc brake (16) of a vehicle between brake pads (4, 5) and a brake disc (3), having a brake calliper (1) designed as a sliding calliper, an adjusting device (8) for compensating for a change in the air gap (LSA, LSI) due to wear and at least one reset device (14) for resetting the brake calliper (1) to an initial position, with the following method steps:
S1 the identification of a need for readjustment by determining an air gap distribution between an inner air gap (LSI) and an outer air gap (LSA);
S2 the determination of a braking force required for resetting; and
S3 the readjustment of the two-sided air gap (LSA, LSI) by introducing the braking force thus determined into the disk brake (16) when the vehicle is at a standstill,
**characterised in that** when determining the air gap distribution a maximum wear value in a predetermined time period (t₁ - t₀) on completion of braking below a threshold value (F_{S}) as a total air gap (SLS) is assumed.

3. A method according to claim 1 or 2, **characterised in that** sensors are used in determining the air gap distribution as a total air gap (SLS).

4. A method according to any one of the preceding claims, **characterised in that** an inner air gap (LSI₁) or/and an air gap difference (ΔLS) is/are calculated from the outer air gap (LSA) and the inner air gap (LSI) at the end of the predetermined time period (t₁ - t₀) based on an assumed distribution of the total air gap (SLS) to the outer air gap (LSA) and the inner air gap (LSI).

5. A method according to any one of claims 2 to 4, **characterised in that** the calculated inner air gap (LSI₁) or/and the air gap difference (ΔLS) is/are compared with an air gap limit value (LSG).

6. A method according to claim 5, **characterised in that** the braking force required for readjustment is determined when the inner air gap (LSI₁) thus calculated or/and an air gap difference (ΔLS) is/are the same as the air gap limit value (LSG) or less than the air gap limit value (LSG).

7. A method according to any one of the preceding claims, **characterised in that** the braking force required for readjustment, being a fixed threshold value of the braking force according to the type of the disc brake (16), is a predetermined value.

8. A method according to any one of the preceding claims, **characterised in that** the braking force required for readjustment is tailored dynamically in order to optimise an air consumption of the disk brake (16) and/or the component load.

9. A method according to claim 8, **characterised in that** the braking force required for readjustment is tailored dynamically on the basis of the brake type, the residual pad thickness of the brake pads (4, 5) and/or the temperature of the brake pads (4, 5).

10. A method according to claim 8 or 9, **characterised in that** the dynamic tailoring of the braking force required for readjustment using the residual pad thickness of the brake pads (4, 5) and/or the temperature of the brake pads (4, 5) is carried out using appropriate correction curves/characteristic maps.

11. A method according to any one of the preceding claims, **characterised in that** the readjustment takes place at set intervals.

12. An arrangement (20) for carrying out the method according to any one of the preceding claims, comprising:
the disc brake (16) with an actuator (17);
a wear detection device (18); and
a control device (19);
the wear detection device (18) being connected to the adjustment device (8) of the disc brake (16) in order to detect wear on the brake pads (4, 5) and the brake disc (3), to the actuator (17) in order to determine a collective braking force and to the control device (19) and to the control device (19), and that the control device (19) is connected to the actuator (17).

13. An arrangement (20) according to claim 12, **characterised in that** the arrangement (20) has at least one sensor for detecting wear on the brake pads (4, 5) and the brake disc (3) or/and at least one temperature sensor for detecting the temperature of the brake pads (4, 5) and the brake disc (3).

## Revendications

1. Procédé de réajustement du jeu (LSA, LSI) des garnitures des deux côtés d'un frein (16) à disque d'un véhicule entre des garnitures (4, 5) de frein et un disque (3) de frein, comprenant un étrier (1) de frein constitué sous la forme d'un étrier coulissant, un dispositif (8) de rattrapage de jeu pour compenser une variation due à l'usure du jeu (LSA, LSI) des garnitures et au moins un dispositif (14) de rappel pour ramener l'étrier (1) de frein dans une position initiale, comprenant les stades de procédé suivants :
S1 détermination d'un besoin de réajustement par détermination d'une répartition du jeu des garnitures entre un jeu (LSI) des garnitures à l'intérieur et un jeu (LSA) des garnitures à l'extérieur ;
S2 détermination d'une force de freinage nécessaire pour le réajustement ; et
S3 réajustement du jeu (LSA, LSI) des garnitures des deux côtés par application de la force de freinage ainsi déterminée au frein (16) à disque, alors que le véhicule est à l'arrêt,
**caractérisé en ce que**, lors de la détermination de la répartition du jeu des garnitures, on détermine une valeur d'usure dans un créneau (t₁ - t₀) temporel déterminé à l'avance, alors que des freinages ont été effectués en dessous d'une valeur (F_{S}) de seuil, comme jeu (SLS) des garnitures somme.

2. Procédé de réajustement du jeu (LSA, LSI) des garnitures des deux côtés d'un frein (16) à disque d'un véhicule entre des garnitures (4, 5) de frein et un disque (3) de frein, comprenant un étrier (1) de frein constitué sous la forme d'un étrier coulissant, un dispositif (8) de rattrapage de jeu pour compenser une variation due à l'usure du jeu (LSA, LSI) des garnitures et au moins un dispositif (14) de rappel pour ramener l'étrier (1) de frein dans une position initiale, comprenant les stades de procédé suivants :
S1 détermination d'un besoin de réajustement par détermination d'une répartition du jeu des garnitures entre un jeu (LSI) des garnitures à l'intérieur et un jeu (LSA) des garnitures à l'extérieur ;
S2 détermination d'une force de freinage nécessaire pour le réajustement ; et
S3 réajustement du jeu (LSA, LSI) des garnitures des deux côtés par application de la force de freinage ainsi déterminée au frein (16) à disque, alors que le véhicule est à l'arrêt,
**caractérisé en ce que**, lors de la détermination de la répartition du jeu des garnitures, on prend une valeur d'usure maximum dans un créneau (t₁- t₀) temporel déterminé à l'avance, alors que les freinages ont été effectués en dessous d'une valeur (F_{S}) de seuil, comme jeu (SLS) des garnitures somme.

3. Procédé suivant la revendication 1 ou 2, **caractérisé en ce que**, lors de la détermination de la répartition du jeu des garnitures, comme jeu (SLS) de garnitures somme, on utilise des capteurs.

4. Procédé suivant l'une des revendications précédentes, **caractérisé en ce qu'**à partir d'une répartition supposée du jeu (SLS) des garnitures somme, on calcule, sur le jeu des garnitures à l'extérieur (LSA) et le jeu des garnitures à l'intérieur (LSI), un jeu des garnitures à l'intérieur (LSI₁) ou/et une différence (ΔLS) de jeu des garnitures à partir du jeu des garnitures à l'extérieur (LSA) et du jeu des garnitures à l'intérieur (LSI) à la fin du créneau (t₁-t₀) temporel déterminé à l'avance.

5. Procédé suivant l'une des revendications 2 à 4, **caractérisé en ce que** l'on compare le jeu des garnitures calculé à l'intérieur (LSI) ou/et la différence (ΔLS) du jeu des garnitures à une valeur (LSG) limite du jeu des garnitures.

6. Procédé suivant la revendication 5, **caractérisé en ce que** la détermination de la force de freinage nécessaire pour le réajustement s'effectue si le jeu des garnitures calculé à l'intérieur (LSI) ou/et la différence (ΔLS) du jeu des garnitures est égale à la valeur (LSG) limite du jeu des garnitures ou est inférieure à la valeur (LSG) limite du jeu des garnitures.

7. Procédé suivant l'une des revendications précédentes, **caractérisé en ce que** la force de freinage nécessaire pour le réajustement est une valeur déterminée à l'avance sous la forme d'une valeur de seuil fixe de la force de freinage correspondant au type du frein (16) à disque.

8. Procédé suivant l'une des revendications précédentes, **caractérisé en ce que** l'on adapte la force de freinage nécessaire au réajustement dynamiquement pour optimiser une consommation d'air du frein (6) à disque et/ou de la charge de la pièce.

9. Procédé suivant la revendication 8, **caractérisé en ce que** l'on adapte la force de freinage au réajustement dynamique à l'aide du type de frein de l'épaisseur restante des garnitures (4, 5) de frein et/ou de la température des garnitures (4, 5) de frein.

10. Procédé suivant la revendication 8 ou 9, **caractérisé en ce que** l'adaptation dynamique de la force de freinage nécessaire au réajustement s'effectue au moyen de l'épaisseur restante des garnitures (4, 5) de frein et/ou de la température des garnitures (4, 5) de frein à l'aide de courbes de correction/de caractéristiques correspondantes.

11. Procédé suivant l'une des revendications précédentes, **caractérisé en ce que** le réajustement s'effectue à des intervalles fixes.

12. Système (20) pour effectuer le procédé suivant l'une des revendications précédentes, comprenant :
le disque (16) de frein, ayant un actionneur (17) ;
un dispositif (18) de détection d'usure ; et
un appareil (19) de commande ;
dans lequel le dispositif (18) de détection d'usure est relié au dispositif (8) de rattrapage de jeu du frein (16) à disque pour détecter l'usure des garnitures (4, 5) de frein et le disque (3) de frein est relié à l'actionneur (17) pour déterminer un collectif de force de freinage et à l'appareil (19) de commande et l'appareil (19) de commande est relié à l'actionneur (17).

13. Système (20) suivant la revendication 12, **caractérisé en ce que** l'agencement (20) a au moins un capteur de détection de l'usure des garnitures (4, 5) de frein et du frein (3) à disque ou/et au moins un capteur de température pour détecter la température des garnitures de (4, 5) de frein et du disque (3) de frein.
